# EUROPÄISCHE PATENTSCHRIFT

(11) **EP 0 557 947 B1**
(45) Veröffentlichungstag und Bekanntmachung des Hinweises auf die Patenterteilung: **19.07.1995**
(21) Anmeldenummer: 93102842.7
(22) Anmeldetag: 23.02.1993
(51) Int. Cl.: F16F 9/30, E04H 9/02

(54) **Horizontal und vertikal wirkender viskoser Schwingungsdämpfer**
Horizontally- and vertically-working viscous vibration damper
Amortisseur de vibrations visqueux à action horizontale et verticale

(30) Priorität: 27.02.1992 DE 4206097
(43) Veröffentlichungstag der Anmeldung: 01.09.1993
(73) Patentinhaber: GERB Schwingungsisolierungen GmbH & Co. KG, D-13362 Berlin (DE)
(72) Erfinder: Valdivia, Anton, Dr.-Ing., W-1000 Berlin 21 (DE); Weber, Frank-Michael, Dipl.-Phys., W-1000 Berlin 30 (DE)
(74) Vertreter: Vogeser, Werner, Dipl.-Ing.

(56) Entgegenhaltungen:
- EP-A- 0 413 820
- DE-B- 1 300 367
- FR-A- 1 092 543

## Beschreibung

Die Erfindung betrifft einen horizontal und vertikal wirkenden Schwingungsdämpfer gemäß Oberbegriff des Anspruchs 1.

Bekannt sind viskose Dämpfer, die aus einem meist zylindrischen Gehäuse, das mit einem viskosen oder viskoelastischen Medium gefüllt ist, und einem ebenfalls meist zylindrischen Dämpferstempel bestehen, der in das Dämpfungsmedium eintaucht. Ein Teil - meistens der Dämpferstempel - ist mit dem mechanisch zu dämpfenden Objekt, das andere Teil mit einem ortsfesten Punkt verbunden.

Bei mechanischen Schwingungen des Objekts kommt es zu einer Relativbewegung zwischen Dämpfergehäuse und Dämpferstempel. Dabei wird die mechanische Energie des Gesamtsystems durch Scherungs- und Verdrängungsvorgänge im Dämpfungsmedium in Wärme umgewandelt. Die Dämpfungskraft wächst annähernd linear mit der Viskosität des Dämpfungsmediums und der Größe der relativ zueinander bewegten Scher- und Verdrängungsflächen. Sie wächst weiterhin mit kleiner werdenden Abständen zwischen diesen Flächen.

Dämpfungskräfte werden bei derartigen Schwingungsdämpfern bei jeder Relativbewegung zwischen Dämpfergehäuse und Dämpferstempel erzeugt; die Größe dieser Kraft ist aber im allgemeinen abhängig von der Richtung der Bewegung. Das Verhältnis der Kräfte bei reiner Vertikalbewegung (Bewegung in Richtung der Zylinderachse des Gehäuses bzw. Stempels) und reiner Horizontalbewegung kann durch geeignete Abmessungen von Gehäuse und Stempel in gewissen Grenzen variiert werden.

Derartige Schwingungsdämpfer werden im Maschinenbau zur Dämpfung schwingungsfähiger Systeme eingesetzt. Dabei kann es sich z.B. um Maschinen oder Maschinenteile, empfindliche schwingungsisoliert aufgestellte Meßapparate, Rohrleitungen oder komplette Gebäude handeln.

Bei bekannten Dämpfern der eingangs bezeichneten Gattung sind am Dämpferstempel in axialem Abstand zueinander bspw. zwei Ringscheiben und an der zylinderischen Umlaufwand des Gehäuses in axialem Abstand zueinander bspw. zwei weitere Ringscheiben befestigt, die eine oberhalb der oberen Dämpferstempel-Ringscheibe, die andere zwischen den zwei Dämpferstempel-Ringscheiben. Bei dieser bekannten Konstruktion werden Dämpfungskräfte erzeugt, wenn sich die einzelnen Ringscheiben bei Horizontalbewegungen parallel aneinander vorbeibewegen. Der Horizontalweg ist begrenzt durch das Spiel der Dämpferstempel-Ringscheiben zum Dämpfergehäuse bzw. das Spiel zwischen dem Dämpferstempel und den am Gehäuse befestigten Ringscheiben.

Ein großer Nachteil der bekannten Schwingungsdämpfer liegt darin, daß große Wege - wie sie besonders in Horizontalrichtung beim Einsatz in Erdbebenschutzsystemen benötigt werden - praktisch nicht möglich sind. Hierzu müssen die Abstände im Falle der bekannten Konstruktion so groß gewählt werden, daß die vorgegebenen Bewegungen ermöglicht werden. Die Dämpfungskraft fällt aber mit wachsenden Abständen ab, so daß wirkungsvolle Schwingungsdämpfer dann sehr große Abmessungen aufweisen.

Der Erfindung liegt die Aufgabe zugrunde, einen Dämpfer der eingangs angegebenen Gattung zu schaffen, der bei vergleichsweise kleinen Abmessungen vergleichsweise große Relativbewegungen, insbesondere in Horizontalrichtung, ermöglicht.

Diese Aufgabe wird erfindungsgemäß durch die Merkmale des kennzeichnenden Teils des Anspruchs 1 gelöst.

Durch diese Ausbildung, zu der bestimmte Durchmesserverhältnisse gehören und die beliebig viele weitere Ringscheiben aufweisen kann, ist nicht nur ein Dämpfer geschaffen, der vergleichsweise große Wege in Horizontalrichtung erlaubt, sondern auch in vergleichsweise kleinen räumlichen Abmessungen herstellbar ist, insbesondere mit vergleichsweise sehr niedriger Bauhöhe. Im übrigen läßt diese Ausbildung Weiterbildungen zu, die für bestimmte Anwendungsfälle optimal geeignet sind.

Zur Begrenzung der Horizontal- und/oder der Vertikalbewegung der Ringscheiben empfiehlt sich die Anordnung von Mitnehmern am Außenrand der Ringscheiben insbesondere in der Form von Ringflanschen.

Zur weiteren Bauhöhenreduzierung können die Ringscheiben Ringflansche unterschiedlicher Durchmesser aufweisen und tellerartig ineinander gesetzt sein.

Eine besonders vorteilhafte Ausführungsform besteht darin, daß am Dämpferstempel eine einzige Ringscheibe befestigt angeordnet und oberhalb und unterhalb dieser jeweils eine Gruppe aus beliebig vielen weiteren Ringscheiben angeordnet ist; dabei sind von der Ringscheibe des Dämpferstempels aus gesehen ab der zweiten weiteren Ringscheibe an diesen Ringflansche so vorgesehen, daß die Ringflansche der beiden Ringscheibengruppen axial entgegengesetzt ausgerichtet sind. Von den Ringscheiben aus gesehen sollten die Ringflansche der beiden Ringscheibengruppen aufeinanderzu ausgerichtet sein.

Bei dieser Ausführungsform kann ferner oberhalb der oberen Ringscheibengruppe und unterhalb der unteren Ringscheibengruppe ein mit der Umlaufwand fest verbundener Ringflansch vorgesehen sein, der die Vertikalbewegungen der Ringscheibengruppe und des Dämpferstempels auf einen vorgegebenen Maximalwert begrenzt.

Wenn die letztgenannten Ringflansche nicht vorgesehen sind, kann die unterste Ringscheibe auf der Bodenplatte des Dämpfergehäuses aufliegend angeordnet sein, wobei diese Ausbildung dann bevorzugt eingesetzt wird, wenn eine besonders niedrige Bauhöhe gefordert ist.

In weiterer vorteilhafter Ausbildung können am Dämpferstempel zwei Ringscheiben mit axialem Abstand zueinander befestigt angeordnet und zwischen diesen die beiden Gruppen von weiteren Ringscheiben angeordnet sein. Bei dieser Ausbildung mit zwei Ringscheibengruppen zwischen zwei dem Dämpferstempel zugeordneten Ringscheiben kann die größte Ringscheibe beider Scheibengruppen zu beiden Gruppen gehören, d. h. es gibt nun eine einzige entsprechend große Ringscheibe, der dann zweckmäßigerweise ein doppelseitiger Ringflansch zugeordnet ist.

Eine andere besonders flache Ausführungsform ist dadurch erreichbar, daß auf die dem Dämpferstempel zugeordnete Ringscheibe mindestens zwei weitere Ringscheiben mit den besonderen Durchmesserverhältnissen folgen. Hierbei kann die axiale gegenseitige Zuordnung der Ringscheiben sehr eng und die horizontale Bewegbarkeit zugleich sehr groß sein. Die vertikale Bewegbarkeit aller Scheiben ist streng genommen nur durch die Bauhöhen des Gehäuses begrenzt.

Insbesondere läßt die vorstehend beschriebene Ausführungsform unter Verzicht auf die Ringflansche eine Weiterbildung mit zusätzlichen Ringscheiben zu, bei der zur einen Seite der Ringscheibe des Dämpferstempels eine Gruppe weiterer Ringscheiben und zur anderen Seite der Ringscheibe des Dämpferstempels eine Gruppe zusätzlicher Ringscheiben angeordnet sind, dies mit entsprechend großer Dämpfungswirkung in vertikaler und in horizontaler Richtung. In Horizontalrichtung verhalten sich die Ringscheiben wegen ihrer dichten gegenseitigen Zuordnung im übrigen praktisch wie ein Teleskop.

Selbstverständlich können mehrere "Großgruppen" von Ringscheiben vorgesehen werden, je bestehend aus einer Gruppe weiterer Ringscheiben und einer Gruppe zusätzlicher Ringscheiben und beide in Anordnung wie vorstehend beschrieben. Hierdurch ist eine weitere Verbesserung der Dämpfungswirkung erreichbar.

Im folgenden wird die Erfindung weiter ins Detail gehend und ausschließlich beispielhaft unter Bezugnahme auf die Zeichnungen beschrieben; in diesen zeigen:
- Fig. 1: einen Vertikalschnitt durch eine erste Ausführungsform eines erfindungsgemäßen Dämpfers,
- Fig. 2: einen Vertikalschnitt durch eine zweite Ausführungsform,
- Fig. 3: einen Vertikalschnitt durch eine dritte Ausführungsform, bei der eine besonders niedrige Bauhöhe realisiert werden kann, und
- Fig. 4: einen Vertikalschnitt durch eine vierte Ausführungsform.

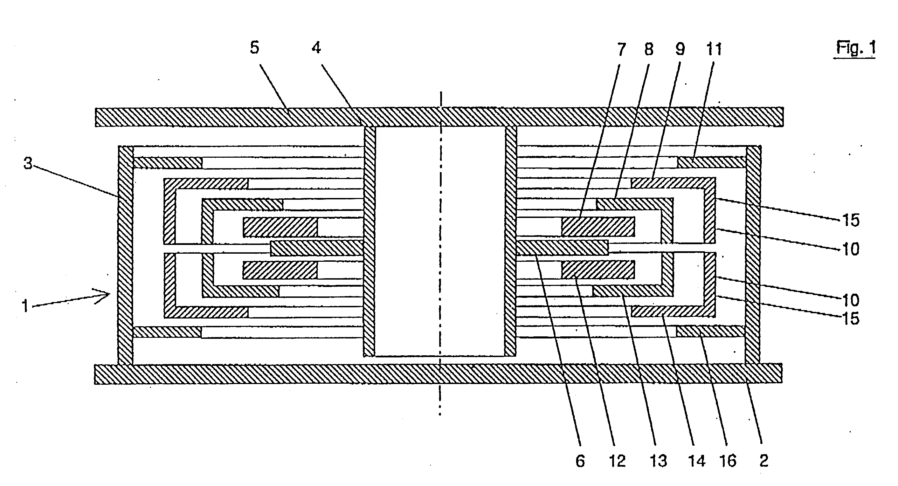

Gemäß Fig. 1 besteht der Dämpfer aus einem äußeren Dämpfergehäuse 1, mit einer unteren Bodenplatte 2 und einer vorzugsweise zylindrischen Umlaufwand 3 sowie aus einem in das Dämpfergehäuse 1 von oben hineinragenden Dämpferstempel 4, der an einer Deckplatte 5 befestigt ist. Mit dem Dämpferstempel 4 ist eine im wesentlichen zentrale Ringscheibe 6 verbunden, die von einer oberen und einer unteren Gruppe je aus mehreren Ringscheiben umgeben ist. Die obere Scheibengruppe umfaßt eine ebene Ringscheibe 7 ferner zwei Ringscheiben 8 und 9, die an ihrem äußeren Umfangsrand mit einem Mitnehmer in Form eines Ringflansches 10 bzw. 15 versehen sind. Schließlich folgt noch eine Ringscheibe 11, die am oberen Rand der Umlaufwand 3 befestigt ist. Die untere Scheibengruppe umfaßt eine ebene Ringscheibe 12, zwei Ringscheiben 13 und 14, die mit einem Ringflansch 10 bzw. 15 ausgestattet sind, und schließlich eine Ringscheibe 16, die am Bodenbereich der Umlaufwand 3 angeordnet ist.

Mittels des Dämpfers nach Fig. 1 ist der Nachteil einer geringen Horizontalverschiebbarkeit vermieden.

Bei der gezeigten Ausführungsform dient die Bodenplatte 2 als Befestigungsmittel bzw. Fixpunkt. Das Dämpfergehäuse 1 ist mit viskosen Dämpfungsmedium gefüllt. Der Dämpferstempel 4 ist über die Deckplatte 5 mit einem schwingenden Objekt (nicht gezeigt) verbunden. Die Ringscheiben 7, 8 und 9 der oberen Scheibengruppe sowie die Ringscheiben 12, 13 und 14 der unteren Scheibengruppe sind frei verschiebbar. Die Ringscheiben 8 und 9 sowie 13 und 14 haben jeweils einen solchen Durchmesser, daß jeweils zwei Ringscheiben 8 und 9 bzw. 13 und 14 tellerartig ineinander greifend angeordnet sind. Die Ringflansche 10 bzw. 15 der Ringscheiben 8, 9 bzw. 13, 14 haben die Aufgabe eines Mitnehmers. Wenn der Dämpferstempel 4 in Horizontalrichtung bewegt wird, müssen Kräfte aufgebracht werden, die die Scherung des viskosen Dämpfungsmediums zwischen der Ringscheibe 6 und der benachbarten Ringscheibe 7 bzw. 12 ermöglichen. Die Ringscheibe 7 stützt sich dabei auf die Ringscheibe 8, letztere auf die Ringscheibe 9 und diese dann auf die an der Umlaufwand 3 befestigte Ringscheibe 11. Diese für die obere Scheibengruppe geltenden Verhältnisse gelten analog auch für die untere Scheibengruppe.

Je nach den Abmessungen der einzelnen Bauteile wird die Strecke zwischen dem Dämpferstempel 4 und der Umlaufwand 3 auf kleinere Verschiebungen der einzelnen Ringscheiben aufgeteilt. Bei einem sehr zähen Dämpfungsmedium bewegen sich alle Ringscheiben gleichzeitig so, daß der Gesamtweg dem Relativweg zwischen Dämpferstempel 4 und Umlaufwand 3 entspricht. Bei sehr niedrigviskosen Dämpfungsmedien ergibt sich eine teleskopartige Bewegung. Zunächst bewegt sich der Dämpferstempel 4 mit der Ringscheibe 6; das Dämpfungsmedium wird zwischen den Ringscheiben 6 und 7 geschert. Bei Überschreitung eines konstruktiv bedingten Weges wird zunächst die Ringscheibe 7 mitgenommen, wobei die Dämpfungskraft durch Scherung des Dämpfungsmediums zwischen den Ringscheiben 7 und 8 erzeugt wird. Anschließend wird auch die Ringscheibe 8 bewegt, die ihrerseits bei noch größeren Wegen die Ringscheibe 9 mitnimmt. Auf diese Weise können sehr große Horizontalwege ermöglicht werden, wobei die Dämpfungskräfte bedingt durch die beliebig geringen Abstände zwischen den Ringscheiben sehr große Werte annehmen können.

Ähnliche Größenordnungen können die Kräfte erreichen, wenn der Dämpferstempel 4 in Vertikalrichtung bewegt wird. Diese Kräfte werden hauptsächlich durch die Verdrängung des Dämpfungsmediums zwischen den Ringscheiben 6, 7, 8, 9 und 11 erzeugt. Die Vertikalbewegung ist im Gegensatz zur Horizontalbewegung durch die spezielle Bauform eingeschränkt. Bei Abwärtsbewegung des Dämpferstempels 4 wird der tiefste Punkt beim gegenseitig paarweisen Aufliegen der Ringscheiben 6 und 12, 12 und 13, 13 und 14 sowie 14 und 16 erreicht. Analoges gilt bei Aufwärtsbewegung des Dämpferstempels 4.

Die Axialerstreckung jedes Ringflansches 10 bzw. 15 der beweglichen Ringscheiben 8, 9 bzw. 13, 14 muß so bemessen sein, daß sie länger ist als der Abstand zwischen den einander zugewandten Flächen der an der Umlaufwand 3 festgelegten Ringscheiben 11 und 16 reduziert um die axialen Dicken aller zwischen den Ringscheiben 11 und 16 befindlichen Ringscheiben, also der Ringscheiben 6, 7, 8, 9 und 12, 13, 14. Durch eine solche Bemessung der Axialerstreckung der Ringflansche 10 und 15 ist eine permanente Kopplung aller Ringscheiben gewährleistet und ein Auseinanderfallen der beispielsweise aus den Ringscheiben 6, 7, 8 und 9 bestehenden Scheibengruppe bzw. der aus den Ringscheiben 6, 12, 13, 14 bestehenden Gruppe verhindert. Zugleich ist damit die Ausbildung einer Schiefstellung der einzelnen Ringscheiben verhindert, die zu einer Verklemmung führen könnte, in deren Folge bei entgegengesetzt gerichteter Bewegung eine Auseinanderbewegung der Ringscheiben verhindert wäre.

Wenn größere Vertikalwege notwendig sind, kann die Ausführungsform nach Fig. 1 so abgewandelt werden, daß die Ringscheibe 6 am Dämpferstempel 4 nicht fest angeordnet ist, sondern einen radialen Abstand vom Dämpferstempel 4 einhält bzw. mit radialem Spiel zum Dämpferstempel 4 angeordnet ist. Der Unterschied gegenüber der Ausführungsform nach Fig. 1 besteht dann darin, daß die Ringscheibe 6 vertikal verschiebbar mit dem Dämpferstempel 4 verbunden ist. Hierdurch werden wesentlich größere Vertikalbewegungen ermöglicht; die Dämpfungskraft ist allerdings erheblich geringer als bei der in Fig. 1 dargestellten Ausführungsform. Sie wird praktisch dann nur durch Scherung des Dämpfungsmediums zwischen dem Dämpferstempel 4 und den Innenflächen der Ringscheiben 6, 7, 8, 9 und 11 bzw. 6, 12, 13, 14 und 16 erreicht. Ist der Dämpferstempel 4 an seinem unteren Ende abgeschlossen, kann eine zusätzliche Verdrängungskomponente in Vertikalrichtung bzw. eine Scherkomponente bei Horizontalbewegung erzeugt werden. Diese Variante bietet sich vor allem für die Verwendung in Verbindung mit Erdbebenschutzsystemen an, wo die Vertikalbewegungen meistens keine nennenswerte Dämpfung notwendig machen.

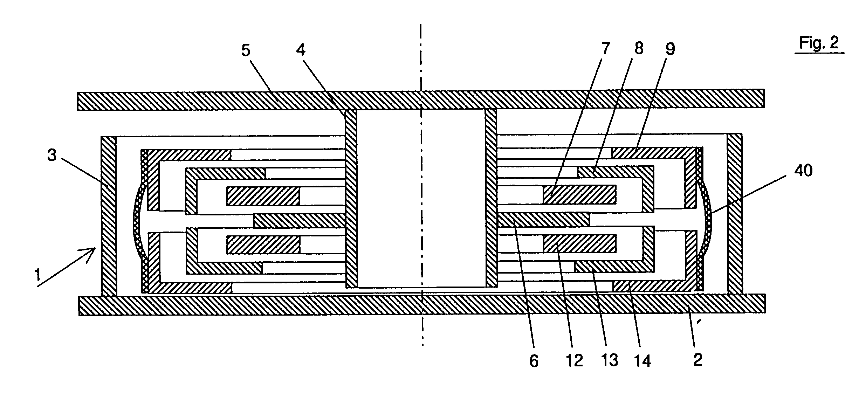

Fig. 2 zeigt eine Ausführungsform, die sich von derjenigen der Fig. 1 in erster Linie dadurch unterscheidet, daß die Ringscheiben 11 und 16 entfallen sind. Diese Ausführungsform ist somit sehr einfach herzustellen.

In weiterer Unterscheidung zur Ausführungsform nach Fig. 1 ist, um die Vertikalbewegung zu begrenzen, eine balgförmige Manschette 40 am Außenumfang der beiden Scheibengruppen so vorgesehen, daß sich beide nur um einen vorgegebenen Weg in axialer Richtung voneinander weg bewegen können. Die Manschette 40 ist somit an der obersten und an der untersten Ringscheibe 9 bzw. 14 befestigt und verhindert ein zu weites Auseinanderbewegen dieser beiden Scheiben.

Die vertikale Dämpfungswirkung kommt bei der Ausführungsform nach Fig. 2 hauptsächlich durch die Verdrängung des Dämpfungsmediums zustande. Der vertikale Dämpfungsweg ist wesentlich größer als bei dem Dämpfer nach Fig. 1.

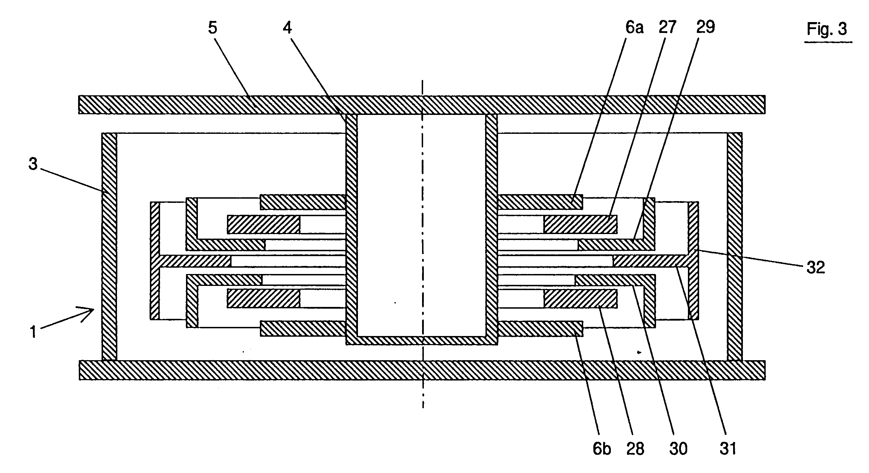

Bei der Ausführungsform nach Fig. 3 sind am Dämpferstempel 4 in axialem Abstand zueinander zwei Ringscheiben 6a, 6b fest angeordnet. Im Zwischenraum zwischen diesen sind zwei Gruppen aus mehreren Ringscheiben vorgesehen. Jede Gruppe umfaßt eine ebene Ringscheibe 27 bzw. 28 ferner eine Ringscheiben 29 bzw. 30 mit jeweils einem äußeren Ringflansch und schließlich eine zentrale Ringscheibe 31, die zu beiden Gruppen gehört und mit einem Doppelringflansch 32 ausgestattet ist, der vom Außenrand der Ringscheibe 31 in axialer Richtung auf einander entgegengesetzten Seiten absteht.

Die Ausführungsform nach Fig. 3 ist insbesondere für große vertikal wirkende Dämpfungskräfte geeignet, und zwar bei großen Bewegungen. Da bei dieser Ausführungsform keine Ringscheiben 11 bzw. 16 gemäß Fig. 1 vorhanden sind, sind größere Vertikalbewegungen möglich. Bei geeigneten Abmessungen sind praktisch beliebig große Vertikalbewegungen möglich, die mit einer Dämpfungskraft verbunden sind, die hauptsächlich durch die Verdrängung des Dämpfungsmediums an den Ober- und Unterflächen der Scheibengruppen erzeugt wird. In Horizontalrichtung ergibt sich die schon oben beschriebene Arbeitsweise. Bei Beibehaltung der Dämpfungswirkung in Vertikalrichtung kann die Dämpfungskraft für Horizontalbewegungen beliebig erhöht werden, wenn mehrere Scheibenpakete, bestehend aus Ringscheiben 27, 29, 31, 30, 28, vorgesehen werden. Für jedes weitere Paket ist ggf. dann sogar nur eine weitere Ringscheibe 6a bzw. 6b erforderlich.

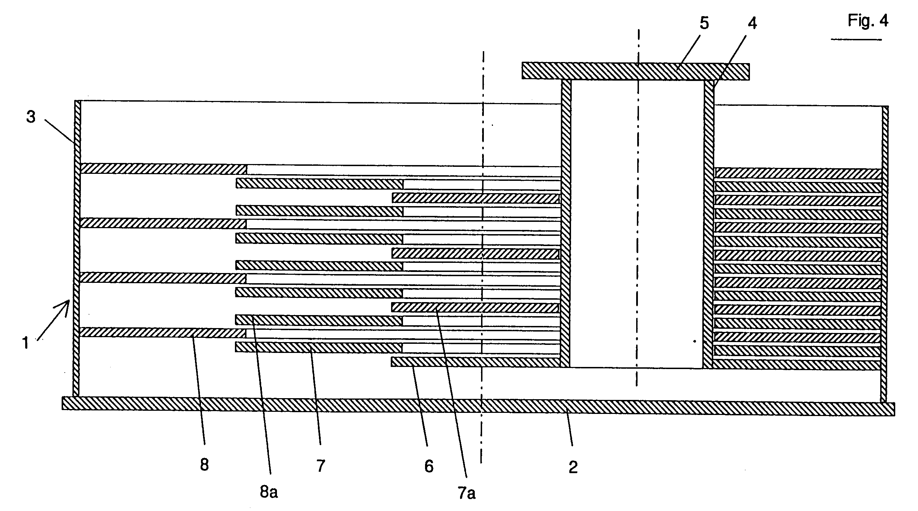

Bei der Ausführungsform der Fig. 4, die in Draufsicht eine im wesentlichen kreisrunde Gestalt besitzt, ist am Dämpferstempel 4 eine Ringscheibe 6 fest angeordnet, die also mit dem Dämpferstempel 4 sowohl vertikal als auch horizontal bewegbar ist. In Axialrichtung folgt auf diese Ringscheibe 6 eine erste weitere Ringscheibe 7 und eine weitere Ringscheibe 8, wobei jede weitere Ringscheibe hinsichtlich der vorausgehenden Ringscheibe einen Außendurchmesser größer als letztere und einen Innendurchmesser kleiner als der Außendurchmesser der letzteren aufweist. Auf die letzte der dargestellten weiteren Ringscheiben, nämlich im dargestellten Fall die weitere Ringscheibe 8, folgen zusätzliche Ringscheiben 8a und 7a, wobei für diese und ihre jeweils vorausgehenden Ringscheiben dieselben Durchmesserverhältnisse gelten wie eben angegeben. Allerdings ist die kleinste der zusätzlichen Ringscheiben, nämlich die Ringscheibe 7a, am Dämpferstempel 4 nicht fest angeordnet, sondern diesem unter leichtem radialem Spiel zugeordnet. Ein solches radiales Spiel ist im übrigen außenseitig der Ringscheibe 8 gegenüber der Umlaufwand 3 vorgesehen. Die beiden angesprochenen Radialspiele dienen der Bewegbarkeit des Dämpferstempels 4 samt der zuvor angesprochenen Ringscheiben in vertikaler Richtung. In horizontaler Richtung bewirkt eine Verschiebung des Dämpferstempels 4 aus der in Fig. 4 dargestellten rechten Endstellung nach links eine Verschiebung der Ringscheiben 6 und 7a relativ zu den Ringscheiben 7 und 8a bzw. zur Ringscheibe 8. Diese Verschiebung ist quasi eine teleskopartige Verschiebung.

Zur Vergrößerung der Dämpfungswirkung sowohl in horizontaler als auch in vertikaler Richtung kann der Dämpfer mit mehreren "Großgruppen" von Ringscheiben wie vorstehend beschrieben ausgestattet werden, wie dies auch aus Fig. 4 zu ersehen ist. Für den dort dargestellten Fall bildet die jeweils kleinste zusätzliche Ringscheibe 7a einer ersten "Großgruppe" zugleich die kleinste weitere Ringscheibe der nächsten "Großgruppe"; sie stellt also hinsichtlich der letztgenannten "Großgruppe" ein Äquivalent zu der Ringscheibe 6 der ersten "Großgruppe" dar, allerdings ohne zugleich am Dämpferstempel 4 fest angeordnet zu sein.

Diese Ausführungsform zeichnet sich durch eine besonders niedrige Bauhöhe im Hinblick auf eine unverhältnismäßig große Dämpfungswirkung in Vertikalrichtung aus, wobei sie zugleich verhältnismäßig sehr große Horizontalbewegungen ermöglicht.

Im übrigen ist eine Reihe von Änderungen und Abwandlungen der gezeigten Ausführungsbeispiele möglich; so kann beispielsweise bei der Ausführungsform nach Fig. 2 die Ringscheibe 6 an dem Dämpferstempel 4 mit radialem Spiel angeordnet sein, um dadurch eine spezifische Dämpfungscharakteristik zu realisieren. Auch besteht die Möglichkeit, die jeweils gezeigten Scheibengruppen mehrfach übereinander anzuordnen und mit beliebig vielen Ringscheiben auszustatten, um dadurch größere Dämpfungskräfte realisieren zu können.

Alle Ausführungsformen sind solche besonders gedrängter Bau weise, insbesondere mit niedrig gehaltener Bauhöhe.

## Patentansprüche

1. Horizontal und vertikal wirkender Schwingungsdämpfer mit einem Dämpfergehäuse mit vorzugsweise zylindrischer Umlaufwand, die auf einer Bodenplatte befestigt ist, einem in das Dämpfergehäuse hineinragenden Dämpferstempel, dem quer zur Längsachse mindestens eine Ringscheibe zugeordnet ist, weiteren Scheibenelementen und mit einem viskosen Dämpfungsmedium, **dadurch gekennzeichnet,** daß in Axialrichtung des Dämpferstempels (4) oberhalb der mindestens einen Ringscheibe (6; 6b) weitere Ringscheiben (7, 8, 9 bzw. 12, 13, 14; 27, 29 bzw. 28, 30) frei beweglich angeordnet sind, wobei die erste (7) der weiteren Ringscheiben (7, 8) einen Außendurchmesser größer und einen Innendurchmesser kleiner als der Außendurchmesser der Ringscheibe (6; 6b) des Dämpferstempels (4) aufweist und für jede nachfolgende weitere Ringscheibe (8) bezüglich der vorausgehenden weiteren Ringscheibe (7) dieselben Durchmesserverhältnisse gelten.

2. Dämpfer nach Anspruch 1, **dadurch gekennzeichnet,** daß an mindestens einigen der weiteren Ringscheiben am Außenrand jeweils ein Mitnehmer (10, 15; 32) ausgebildet ist, mittels dessen die Horizontal- bzw. Radialbewegung der Ringscheiben auf die benachbarten Ringscheiben nach Überschreiten eines vorbestimmten Weges übertragbar ist.

3. Dämpfer nach Anspruch 2, **dadurch gekennzeichnet,** daß der Mitnehmer als axialer Ringflansch (10, 15; 32) ausgebildet ist.

4. Dämpfer nach Anspruch 2 oder 3, **dadurch gekennzeichnet,** daß die Ringscheiben (8, 9 bzw. 13, 14) mit Ringflanschen (10, 15) unterschiedliche Durchmesser aufweisen und tellerartig ineinander setzbar sind.

5. Dämpfer nach mindestens einem der Ansprüche 2 bis 4, **dadurch gekennzeichnet,** daß am Dämpferstempel (4) eine einzige Ringscheibe (6) insbesondere befestigt angeordnet und oberhalb und unterhalb dieser jeweils eine Gruppe aus weiteren Ringscheiben (7, 8, 9 bzw. 12, 13, 14) angeordnet ist, wobei von der Ringscheibe (6) des Dämpferstempels (4) aus gesehen ab der zweiten weiteren Ringscheibe (8, 9; 13, 14) an diesen ein Ringflansch (10, 15) vorgesehen ist und die Ringflansche (10, 15) der beiden Ringscheibengruppen von ihren Ringscheiben aus gesehen axial entgegengesetzt ausgerichtet sind.

6. Dämpfer nach Anspruch 5, **dadurch gekennzeichnet,** daß die oberste Ringscheibe (9) mit größtem Durchmesser der oberen Ringscheibengruppe und die unterste Ringscheibe (14) mit größtem Durchmesser der unteren Ringscheibengruppe über eine balgförmige Manschette (40) miteinander verbunden sind.

7. Dämpfer nach Anspruch 5 oder 6, **dadurch gekennzeichnet,** daß oberhalb der oberen und unterhalb der unteren Scheibengruppe ein mit der Umlaufwand (3) fest verbundener Ringflansch (11 bzw. 16) vorgesehen ist, der die Vertikalbewegungen der Ringscheibengruppen und des Dämpferstempels (4) begrenzt.

8. Dämpfer nach Anspruch 5, **dadurch gekennzeichnet,** daß am Dämpferstempel (4) zwei Ringscheiben (6a, 6b) in axialem Abstand zueinander insbesondere befestigt angeordnet sind und zwei Gruppen von weiteren Ringscheiben (27, 29, 31; 28, 30, 31) zwischen den beiden Ringscheiben (6a, 6b) des Dämpferstempels (4) angeordnet sind.

9. Dämpfer nach Anspruch 8, **dadurch gekennzeichnet,** daß die größte weitere Ringscheibe (31) zu beiden Ringscheibengruppen gehört und mit einem am Außenrand nach oben und nach unten gerichteten Ringflansch (32) ausgestattet ist.

10. Dämpfer nach Anspruch 1, **dadurch gekennzeichnet,** daß auf die dem Dämpferstempel (4) zugeordnete Ringscheibe (6) mindestens zwei weitere Ringscheiben (7, 8) mit den genannten Durchmesserverhältnissen folgen.

11. Dämpfer nach Anspruch 10, **dadurch gekennzeichnet,** daß auf die mindestens zwei weiteren Ringscheiben (7, 8) eine gleiche Anzahl zusätzlicher Ringscheiben (8a, 7a) folgt, wobei die erste (8a) der zusätzlichen Ringscheiben (8a, 7a) einen Aussendurchmesser größer und einen Innendurchmesser kleiner als der Innendurchmesser der größten (8) der weiteren Ringscheiben (7, 8) aufweist und für jede nachfolgende zusätzliche Ringscheibe (7a) bezüglich der vorausgehenden zusätzlichen Ringscheibe (8a) dieselben Durchmesserverhältnisse gelten und die kleinste zusätzliche Ringscheibe (7a) dem Dämpferstempel (4) lose zugeordnet ist.

12. Dämpfer nach Anspruch 11, **dadurch gekennzeichnet,** daß auf die aus der Ringscheibe (6) des Dämpferstempfels (4), aus den weiteren Ringscheiben (7, 8) und aus den zusätzlichen Ringscheiben (8a, 7a) bestehende Ringscheibengruppe mindestens eine weitere solche Ringscheibengruppe folgt, deren beide kleinsten Ringscheiben dem Dämpferstempel (4) lose zugeordnet sind.

13. Dämpfer nach Anspruch 12, **dadurch gekennzeichnet,** daß die der jeweils vorausgehenden Ringscheibengruppe (6, 7, 8, 8a, 7a) benachbarte kleinste Ringscheibe jeder weiteren Scheibengrupe eine Ringscheibe beider Ringscheibengruppen ist.

14. Dämpfer nach mindestens einem der vorausgehenden Ansprüche, **dadurch gekennzeichnet,** daß der Dämpferstempel (4) als zylindrisches Rohr ausgebildet ist.

15. Dämpfer nach Anspruch 14, **dadurch gekennzeichnet,** daß der Dämpferstempel (4) an seinem freien Ende geschlossen ausgebildet ist.

## Claims

1. Horizontally and vertically acting vibration damper, with a damper housing having a preferably cylindrical continuous wall fastened to a baseplate, with a damper strut which projects into the damper housing and to which at least one annular disk is assigned transversely to the longitudinal axis, with further disk elements and with a viscous damping medium, characterized in that further annular disks (7, 8, 9 or 12, 13, 14; 27, 29 or 28, 30) are arranged freely movably above the at least one annular disk (6; 6b) in the axial direction of the damper strut (4), the first (7) of the further annular disks (7, 8) having an outside diameter larger than and an inside diameter smaller than the outside diameter of the annular disk (6; 6b) of the damper strut (4), and the same diameter ratios applying to each subsequent further annular disk (8) in respect of the preceding further annular disk (7).

2. Damper according to Claim 1, characterized in that there is formed on each of at least some of the further annular disks, at the outer edge, a driver (10, 15; 32), by means of which the horizontal or radial movement of the annular disks can be transmitted to the adjacent annular disks after a predetermined travel has been exceeded.

3. Damper according to Claim 2, characterized in that the driver is designed as an axial annular flange (10, 15; 32).

4. Damper according to Claim 2 or 3, characterized in that the annular disks (8, 9 or 13, 14) with annular flanges (10, 15) have different diameters and can be placed one in the other in a dish-like manner.

5. Damper according to at least one of Claims 2 to 4, characterized in that a single annular disk (6) is arranged, especially fastened, on the damper strut (4), and a group of further annular disks (7, 8, 9 or 12, 13, 14) is respectively arranged above and below said annular disk, an annular flange (10, 15) being provided on these, starting from the second further annular disk (8, 9; 13,14), as seen from the annular disk (6) of the damper strut (4), and the annular flanges (10, 15) of the two annular-disk groups being oriented axially opposite one another, as seen from their annular disks.

6. Damper according to Claim 5, characterized in that the uppermost annular disk (9) of largest diameter of the upper annular-disk group and the bottommost annular disk (14) of largest diameter of the lower annular-disk group are connected to one another via a concertina-shaped sleeve (40).

7. Damper according to Claim 5 or 6, characterized in that there is provided above the upper and below the lower disk group an annular flange (11 or 16) which is connected firmly to the continuous wall (3) and which limits the vertical movements of the annular-disk groups and of the damper strut (4).

8. Damper according to Claim 5, characterized in that two annular disks (6a, 6b) are arranged, especially fastened, on the damper strut (4) at an axial distance from one another, and two groups of further annular disks (27, 29, 31; 28, 30, 31) are arranged between the two annular disks (6a, 6b) of the damper strut (4).

9. Damper according to Claim 8, characterized in that the largest further annular disk (31) belongs to both annular-disk groups and is equipped with an annular flange (32) directed upwards and downwards at the outer edge.

10. Damper according to Claim 1, characterized in that at least two further annular disks (7, 8) having said diameter ratios follow the annular disk (6) assigned to the damper strut (4).

11. Damper according to Claim 10, characterized in that an equal number of additional annular disks (8a, 7a) follows the at least two further annular disks (7, 8), the first (8a) of the additional annular disks (8a, 7a) having an outside diameter larger than and an inside diameter smaller than the inside diameter of the largest (8) of the further annular disks (7, 8), the same diameter ratios applying to each subsequent additional annular disk (7a) in respect of the preceding additional annular disk (8a), and the smallest additional annular disk (7a) being assigned loosely to the damper strut (4).

12. Damper according to Claim 11, characterized in that the annular-disk group consisting of the annular disk (6) of the damper strut (4), of the further annular disks (7, 8) and of the additional annular disks (8a, 7a) is followed by at least one further such annular-disk group, the two smallest annular disks of which are assigned loosely to the damper strut (4).

13. Damper according to Claim 12, characterized in that the smallest annular disk adjacent to the respectively preceding annular-disk group (6, 7, 8, 8a, 7a) and belonging to each further disk group is an annular disk of both annular-disk groups.

14. Damper according to at least one of the preceding claims, characterized in that the damper strut (4) is designed as a cylindrical tube.

15. Damper according to Claim 14, characterized in that the damper strut according to (4) is designed to be closed at its free end.

## Revendications

1. Amortisseur de vibrations à action horizontale et verticale, comportant un carter d'amortisseur à paroi périphérique de préférence cylindrique, qui est fixée sur une plaque de base, un piston d'amortisseur pénétrant dans le carter d'amortisseur et auquel est associé, transversalement à l'axe longitudinal, au moins un disque annulaire, d'autres éléments de disque, ainsi qu'un fluide visqueux, caractérisé en ce que dans la direction axiale du piston d'amortisseur (4), au-dessus dudit au moins un disque annulaire (6; 6b), sont disposés de manière librement mobiles, des disques annulaires supplémentaires (7, 8, 9 et 12, 13, 14; 27, 29 et 28, 30), le premier (7) des disques annulaires supplémentaires (7, 8) présentant un diamètre extérieur supérieur, et un diamètre intérieur inférieur au diamètre extérieur du disque annulaire (6; 6b) du piston d'amortisseur (4), et les mêmes rapports de diamètres étant valables pour chaque disque annulaire supplémentaire suivant (8) par rapport au disque annulaire supplémentaire précédent (7).

2. Amortisseur selon la revendication 1, caractérisé en ce qu'au moins sur quelques uns des disques annulaires supplémentaires, est formé sur le bord extérieur, un entraîneur (10, 15; 32), au moyen duquel le mouvement horizontal ou radial, des disques annulaires peut être transmis aux disques annulaires voisins, après dépassement d'un déplacement prédéterminé.

3. Amortisseur selon la revendication 2, caractérisé en ce que l'entraîneur est réalisé sous la forme d'un flasque annulaire axial (10, 15; 32).

4. Amortisseur selon la revendication 2 ou 3, caractérisé en ce que les disques annulaires (8, 9 et 13, 14) comportant des flasques annulaires (10, 15), présentent des diamètres différents et peuvent être insérés l'un dans l'autre à la manière de coupelles.

5. Amortisseur selon l'une au moins des revendications 2 à 4, caractérisé en ce que sur le piston d'amortisseur (4) est disposé, notamment fixé, un seul disque annulaire (6), et respectivement au-dessus et en-dessous de celui-ci est disposé un groupe de disques annulaires supplémentaires (7, 8, 9 et 12, 13, 14), et en ce que vu du disque annulaire (6) du piston d'amortisseur (4), à partir du second disque annulaire supplémentaire (8, 9; 13, 14), est prévu sur ceux-ci, un flasque annulaire (10, 15), et les flasques annulaires (10, 15) des deux groupes de disques annulaires sont d'orientation axiale opposée, en se référant à leurs disques annulaires.

6. Amortisseur selon la revendication 5, caractérisé en ce que le disque annulaire supérieur (9) de diamètre le plus grand, du groupe supérieur de disques annulaires, et le disque annulaire inférieur (14) de diamètre le plus grand du groupe inférieur de disques annulaires, sont reliés l'un à l'autre par l'intermédiaire d'un fourreau (40) en forme de soufflet.

7. Amortisseur selon la revendication 5 ou 6, caractérisé en ce qu'au-dessus du groupe supérieur de disques et en-dessous du groupe inférieur, est prévu un flasque annulaire (11 respectivement 16), qui est relié de manière fixe à la paroi périphérique (3), et qui limite les mouvements verticaux des groupes de disques annulaires et du piston d'amortisseur (4).

8. Amortisseur selon la revendication 5, caractérisé en ce que sur le piston d'amortisseur (4) sont disposés, notamment fixés, deux disques annulaires (6a, 6b) espacés axialement, et deux groupes de disques annulaires supplémentaires (27, 29, 31; 28, 30, 31) sont disposés entre les deux disques annulaires (6a, 6b) du piston d'amortisseur (4).

9. Amortisseur selon la revendication 8, caractérisé en ce que le disque annulaire supplémentaire (31) le plus grand, fait partie des deux groupes de disques annulaires, et est équipé sur son bord extérieur, d'un flasque annulaire (32) dirigé vers le haut et vers le bas.

10. Amortisseur selon la revendication 1, caractérisé en ce qu'au disque annulaire (6) associé au piston d'amortisseur (4), succèdent au moins deux disques annulaires supplémentaires (7, 8) présentant les rapports de diamètres évoqués.

11. Amortisseur selon la revendication 10, caractérisé en ce qu'aux-dits au moins deux disques annulaires supplémentaires (7, 8) succèdent un nombre identique de disques annulaires auxiliaires (8a, 7a), le premier (8a) des disques annulaires auxiliaires (8a, 7a) présentant un diamètre extérieur supérieur et un diamètre intérieur inférieur au diamètre intérieur du plus grand (8) des disques annulaires supplémentaires (7, 8), et les mêmes rapports de diamètres étant valables pour chaque disque annulaire auxiliaire suivant (7a) par rapport au disque annulaire auxiliaire précédent (8a), le disque annulaire auxiliaire (7a) le plus petit étant associé de manière libre au piston d'amortisseur (4).

12. Amortisseur selon la revendication 11, caractérisé en ce qu'au groupe de disques annulaires composé du disque annulaire (6) du piston d'amortisseur (4), des disques annulaires supplémentaires (7, 8) et des disques annulaires auxiliaires (8a, 7a), succède au moins un autre tel groupe de disques annulaires, dont les deux plus petits disques annulaires sont associés de manière libre au piston d'amortisseur (4).

13. Amortisseur selon la revendication 12, caractérisé en ce que le disque annulaire le plus petit de chaque autre groupe de disques annulaires, voisin du groupe de disques annulaires respectivement précédent, est un disque annulaire des deux groupes de disques annulaires.

14. Amortisseur selon l'une au moins des revendications précédentes, caractérisé en ce que le piston d'amortisseur (4) est réalisé sous la forme d'un tube cylindrique.

15. Amortisseur selon la revendication 14, caractérisé en ce que le piston d'amortisseur (4) est fermé à son extrémité libre.
